# EUROPEAN PATENT SPECIFICATION

(11) **EP 3 677 123 B1**
(45) Date of publication and mention of the grant of the patent: **18.02.2026**
(21) Application number: 18851463.2
(22) Date of filing: 30.08.2018
(51) Int. Cl.: A23L 7/196, A23B 9/10, A23B 9/02

(54) **METHOD FOR PRE-COOKING RICE FOR THE FINAL COOKING THEREOF IN A MICROWAVE IN EIGHT MINUTES**
VERFAHREN ZUM VORGAREN VON REIS FÜR DAS ENDGAREN VON REIS IN EINER MIKROWELLE IN ACHT MINUTEN
PROCÉDÉ D'OBTENTION D'UN PRÉCUISINÉ DE RIZ POUR SA CUISSON FINALE DANS UN FOUR MICRO-ONDES EN 8 MINUTES

(30) Priority: 01.09.2017 ES 201700714
(43) Date of publication of application: 08.07.2020
(73) Proprietor: Paellasurfoods, S.L., 29006 Málaga (Málaga) (ES)
(72) Inventor: ZAMORA PEREZ, Francisco, 14004 Córdoba (ES)
(74) Representative: Pons Ariño, Angel
(86) International application number: PCT/ES2018/000066
(87) International publication number: WO 2019/043275

(56) References cited:
- EP-A1- 0 300 948
- EP-A1- 0 306 655
- EP-A1- 2 959 781
- EP-B1- 0 300 948
- WO-A1-03/073867
- ES-A1- 2 096 530
- ES-A1- 2 161 177
- ES-A1- 2 176 088
- GB-A- 2 352 706
- JP-A- H07 274 855
- US-A1- 2016 060 015
- US-B1- 6 244 164

## Description

### FIELD OF TECHNOLOGY

The invention of the "process of a pre-cooked rice for its final cooking in a microwave in 8 minutes" is part of the industrial manufacture of pre-cooked food and distribution to large supermarket chains and the hotel and catering sector.

### BACKGROUND TO THE INVENTION

Currently, the field of precooked rice dishes is taking on a lot of importance, as paella is the most popular recipe in Spanish gastronomy at an international level.

The difficulty and cost involved in cooking an individual rice preparation means that companies develop processes such as those already in place. Some are based on supplying a can of processed and pasteurized broth with the corresponding amount of raw rice, this if found in supermarkets and large surfaces. There is also a product used mainly in the hotel and catering sector of a mixture of boiled rice with ultra-frozen raw ingredients (seafood etc..) to which you add water and finish cooking in the traditional way.

Others mix stir fry and raw rice with raw ingredients (seafood etc..) deep-frozen to which you add water and finish it off in the traditional way.

EP0300948B1 discloses a process for the preparation of pre-cooked paella.

In the patent document ES2354668B1 it is proposed a procedure of a broth with the stir fry to add the final consumer rice or noodles and its later cooking. It would therefore be ideal to make a precooked rice preparation which includes all the ingredients already cooked in the absence of the recommended water for the complete cooking of the product, in a microwaveable container for an easy and quick preparation in a microwave in only 8 minutes.

To this end, the present invention focuses on the mixing of all the ingredients, cooked and dehydrated at a specific temperature and time, so that the end consumer can finish their complete cooking.

### EXPLANATION OF THE INVENTION

The invention is defined by the appended claim.

The present invention refers to a new pre-cooked dish for human consumption based on rice and stir fry with various ingredients such as seafood, fish, vegetables, meat and without limiting other ingredients. To its process of obtaining and packaging in a suitable container, to be able to carry out its final cooking in a microwave in 8 minutes.

This invention makes this new pre-cooked food can be in any refrigerator or freezer, domestic or professional, anywhere in the world ready for an easy and fast completion of your cooking in a microwave. This process will ensure that the starch does not come off in the final cooking, you only have to add the water indicated on the label, which is 325 mi of water for every 110 gr of rice. The recommended microwave power is 800W-900W.

Giving solution to the complexity that for a great majority of people supposes to add the correct amount of water and salt to leave a rice in its correct cooking point without being overwhelmed and the most important thing the comfort and saving in time that supposes this new invention.

### REALIZATION OF THE INVENTION

The present invention can be developed in different types of containers suitable for cooking by fire or electric heat sources. It is advisable to use polished steel paella. Example of ingredients for a portion.
- 1 0 g boneless chicken
- 50 grams of green beans
- 4 g of garlic
- 30 g of onion
- 0,5 g sweet paprika
- 40 gr of tomato
- 110 g of raw rice
- 1 g of food colouring
- 2 gr of salt
- 5 grams of dehydrated chicken broth

Pour extra virgin olive oil into a paella pan over medium heat and fry according to variety, meat, fish, seafood or vegetables. When they are golden brown, remove them to cool and set aside. Then, washed and cut, we add garlic, onions, peppers and tomatoes for frying. When we have the golden fried and well dehydrated we add the raw rice, food coloring, salt and dehydrated broth according to variety. The technique of mixing and dehydration is applied, which consists of continuously moving, turning and scratching the bottom of the container for 12 to 15 minutes so that no ingredient is burned. The tools to be used in this teak are steel spatulas and preferably two, one in each hand, at each moment we will scrape the steel spatulas together so as not to allow material (obtained from the bottom of the container) to accumulate on the tips of the steel spatulas, the chip from the scraping will be deposited in the mixture of all the ingredients. We will be 12 to 15 minutes executing this procedure until it exceeds 85°C, the fire power will be medium-low. Once the process is finished, we cool the mixture to proceed with the packaging in containers suitable for microwaves, adding, according to the variety, the product previously fried in case of meat, seafood, fish or vegetables and we thermoseal it in a vacuum and with a protective atmosphere.

For preservation we refrigerate it from 0°C to 4°C or from -18°C to -25°C.

### INDUSTRY APPLICATION

The invention of the "process of a pre-cooked rice for final cooking in a microwave in 8 minutes" is aimed at the industrial manufacture of pre-cooked food and distribution to large national and international supermarket chains. The ease of use of this pre-cooked rice makes it a novelty, and anyone who can handle a microwave can enjoy freshly cooked rice in its many varieties. The recommended microwave power is 800W-900W.

Giving solution to the complexity that for a great majority of people supposes to add the correct amount of water and salt to leave a rice in its correct cooking point without moving it and without being overwhelmed and most important the comfort and time saving that supposes this new invention.

## Claims

1. Process for preparing a pre-cooked rice for final cooking in a microwave in 8 minutes, **characterized in that** it includes
1) stir-frying meat, fish, seafood or vegetables, according to variety, in extra virgin olive oil, until they are golden brown, removing them to cool and setting aside;
2) stir-frying, in extra virgin olive oil, a number of ingredients composed of garlic, onions, peppers and tomatoes and, once these ingredients are golden fried and well dehydrated, adding raw rice, food coloring, salt, and dehydrated broth according to variety ,
wherein the applied mixing and dehydration technique in this step consists of stirring without stopping, turning and scratching in the bottom of the container, so that no ingredient is burned, the fire power being medium-low, during 12-15 minutes, until the temperature exceeds 85°C, the tools used in this technique being steel spatulas and preferably two, one in each hand,
3) cooling the mixture obtained in step 2) to proceed with the individual packaging in a container suitable for microwaves, adding, according to variety, the stir-fried product obtained in step 1);
4) vacuum thermosealing of the packaging with a protective atmosphere and
5) refrigerating the thermosealed packaging from 0°C to 4°C or from -18°C to - 25°C, for its preservation prior to distribution.

## Patentansprüche

1. Verfahren zur Zubereitung von vorgegartem Reis für das Endgaren in einer Mikrowelle in 8 Minuten, **dadurch gekennzeichnet, dass** es Folgendes beinhaltet
1) Anbraten von Fleisch, Fisch, Meeresfrüchten oder Gemüse, je nach Sorte, in nativem Olivenöl extra, bis sie goldbraun sind, Herausnehmen zum Abkühlen und Beiseitestellen;
2) Anbraten einer Reihe von Zutaten, bestehend aus Knoblauch, Zwiebeln, Paprika und Tomaten, in nativem Olivenöl extra, und, sobald diese Zutaten goldbraun gebraten und gut dehydriert sind, Hinzufügen von rohem Reis, Lebensmittelfarbe, Salz und dehydrierter Brühe je nach Sorte,
wobei die in diesem Schritt angewandte Misch- und Dehydratisierungstechnik darin besteht, ohne Unterbrechung zu rühren, zu wenden und am Boden des Behälters zu kratzen, damit keine Zutaten anbrennen, wobei die Feuerstärke mittel-niedrig ist, während 12-15 Minuten, bis die Temperatur 85 °C übersteigt, wobei die bei dieser Technik verwendeten Werkzeuge Stahlspatel sind und vorzugsweise zwei, einer in jeder Hand,
3) Abkühlen der in Schritt 2) erhaltenen Mischung, um mit der Einzelverpackung in einem mikrowellengeeigneten Behälter fortzufahren, wobei je nach Sorte das in Schritt 1) erhaltene angebratene Produkt hinzugefügt wird;
4) Vakuum-Heißversiegeln der Verpackung unter Schutzatmosphäre und
5) Kühlen der heißversiegelten Verpackung auf 0 °C bis 4 °C oder -18 °C bis -25 °C, um sie vor dem Vertrieb zu konservieren.

## Revendications

1. Procédé de préparation d'un riz précuit pour sa cuisson finale dans un four micro-ondes en 8 minutes, **caractérisé en ce qu'**il comprend
1) faire sauter de la viande, du poisson, des fruits de mer ou des légumes, selon la variété, dans de l'huile d'olive extra vierge, jusqu'à ce qu'ils soient dorés, les retirer pour les laisser refroidir et les mettre de côté ;
2) faire sauter, dans de l'huile d'olive extra vierge, un nombre d'ingrédients composés d'ail, des oignons, des poivrons et des tomates et, une fois que ces ingrédients sont dorés et bien déshydratés, ajouter du riz cru, du colorant alimentaire, du sel et du bouillon déshydraté selon la variété, dans lequel la technique de mélange et de déshydratation appliquée à cette étape consiste à remuer sans arrêt, tourner et gratter dans le fond du conteneur, afin qu'aucun ingrédient ne soit brûlé, la puissance du feu étant moyenne à faible, pendant 12 à 15 minutes, jusqu'à ce que la température dépasse 85 °C, les outils utilisés pour cette technique étant des spatules en acier et de préférence deux, une dans chaque main,
3) refroidir le mélange obtenu à l'étape 2) pour procéder à l'emballage individuel dans un récipient adapté aux fours micro-ondes, ajouter, selon la variété, le produit sauté obtenu à l'étape 1) ;
4) thermosceller sous vide l'emballage avec une atmosphère protectrice et
5) réfrigérer l'emballage thermoscellé de 0 °C à 4 °C ou de -18 °C à - 25 °C, pour sa conservation avant sa distribution.
